# EUROPÄISCHE PATENTSCHRIFT

(11) **EP 0 575 641 B1**
(45) Veröffentlichungstag und Bekanntmachung des Hinweises auf die Patenterteilung: **28.08.1996**
(21) Anmeldenummer: 92110237.2
(22) Anmeldetag: 17.06.1992
(51) Int. Cl.: G01D 5/38

(54) **Messeinrichtung**
Measuring device
Dispositif de mesure

(43) Veröffentlichungstag der Anmeldung: 29.12.1993
(73) Patentinhaber: Dr. Johannes Heidenhain GmbH, D-83292 Traunreut (DE)
(72) Erfinder: Allgäuer, Michael, Dipl.-Phys., W-8221 Stein/Traun (DE); Spanner, Erwin, Dipl.-Phys., W-8220 Traunstein (DE)

(56) Entgegenhaltungen:
- EP-A- 0 163 362
- EP-A- 0 378 773
- DE-A- 4 041 584
- PATENT ABSTRACTS OF JAPAN, vol. 16, no. 102 (P-1324), 12. März 1992 ; & JP-A-32 79 812
- MESURES REGULATION AUTOMATISME, Nr. 634, 15. April 1991, Paris FR, Seiten 36-39; J.-F. PEYRUCAT : "Une règle à suivre pour affiner vos positions"
- PATENT ABSTRACTS OF JAPAN, vol. 16, no. 102 (P-1324), 12. März 1992; & JP-A-32 79 811
- Katalog "Lieferübersicht" der Firma Dr. J. Heidenhain GmbH, Dez. 1990, Seite 7

## Beschreibung

Die Erfindung bezieht sich auf ein interferentielles Meßsystem.

In der DE-24 31 551-C1 ist eine derartige Anordnung beschrieben. Eine erste Ausführungsform sogenannter Dreigitter-Meßanordnungen besteht aus drei transparenten Gittern, die nacheinader von dem einfallenden Licht durchdrungen werden. In einer zweiten Ausführungsform ist eine Anordnung beschrieben, die aus nur zwei Gittern besteht, von denen eines transparent und das zweite als Reflexionsgitter ausgebildet ist.

Eine weitere Dreigitter-Meßanordnung ist in der EP-0 163 362-A1 beschrieben. Durch die besondere Ausgestaltung der dort gezeigten Phasengitter ist bezug auf Phasenhub und Tastverhältnis (Steg/Furche) entstehen drei Lichtstrahlenbündel, die bei Relativbewegungen der Gitter zueinander Intensitätsmodulationen erfahren, die in ihrer Phase zueinander versetzt sind (vorzugsweise 120°).

Ferner ist eine Dreigitter-Meßanordnung aus der JP-3-279812 bekannt. Die bei dieser Anordnung vorgesehenen Detektoren sind so angeordnet, daß damit lediglich interferierende Strahlenbündel erfaßbar sind, die exakt senkrecht zu den beiden Gittern verlaufen.

Eine schematische Prinzipskizze des Längenmeßsystems LIP 101 zeigt die Lieferübersicht der Anmelderin aus dem Dezember 1990 auf Seite 7. Dieses Längenmeßsystem beruht auf der Interferenz einer Vielzahl von Teilstrahlenbündeln, die an den Vereinigungsorten zur Überlagerung kommen. Auswerteseitig tragen dadurch eine Vielzahl von Teilstrahlenbündeln zum detektierten Signal bei.

Aufgabe der Erfindung ist es, demgegenüber eine Positionsmeßeinrichtung mit wirkungsmäßig drei Gittern zu schaffen, die interferometrisch abgetastet werden und besonders kleine Gitterkonstanten zulassen. Darüber hinaus sollen die Abtastsignale oberwellenfrei sein.

Diese Aufgabe wird von einer Positionsmeßeinrichtung mit den Merkmalen des Anspruches 1 gelöst.

Mit Hilfe von Ausführungsbeispielen soll die Erfindung anhand der stark schematisierten Zeichnungen noch näher erläutert werden.

Es zeigt
- Figur 1: eine Auflicht-Anordnung;
- Figur 2: eine Blende;
- Figur 3: eine weitere Auflicht-Anordnung;
- Figur 4: eine Kreuzgitter-Anordnung und
- Figur 5: die Anordnung gemäß Figur 1, aber mit Teilstrahlenbündeln endlicher Ausdehnung.

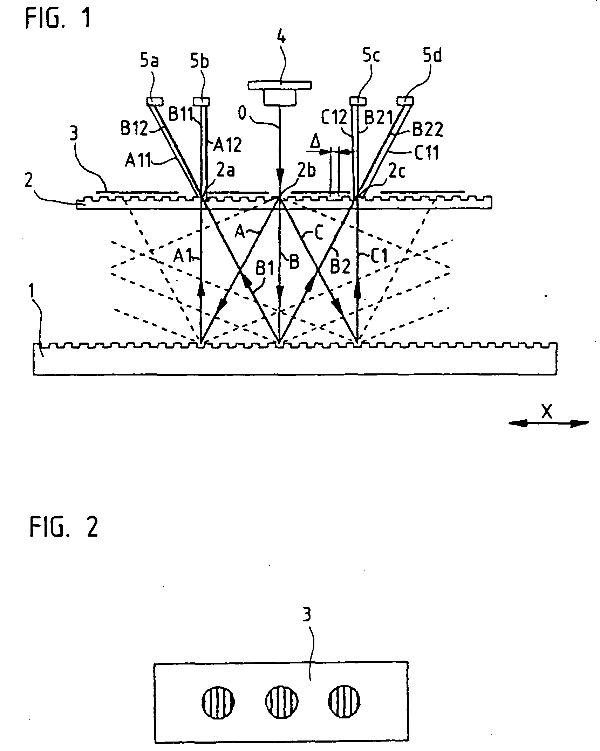

Bei der in Figur 1 dargestellten Auflicht-Anordnung wird von einer Lichtquelle 4 ein Phasengitter 2 beleuchtet. Hinter dem Phasengitter 2 entstehen durch Beugung drei Teilstrahlenbündel A, B, C der Beugungsordnungen "0" und ±"1". Diese Teilstrahlenbündel A, B, C treffen auf ein weiteres Gitter 1, das vorzugsweise ebenfalls als Phasengitter ausgebildet ist. Dieses Gitter 1 ist so ausgelegt, daß keine nullte Beugungsordnung entsteht. Diese Auslegung kann in bekannter Weise durch die Oberflächengestaltung des Gitters 1 erfolgen, z.B. bei einem Gitter mit Rechteckprofil durch Variation der Stufenhöhe, was der Variation des Phasenhubes entspricht.

Es ist auch ein Amplitudengitter-Maßstab einsetzbar.

Vier Teilstrahlenbündel A1, B1, B2, C1, die durch Beugung am Gitter 1 in erster Ordnung entstehen, treffen auf ein weiteres Gitter, das in Figur 1 mit dem Phasengitter 2 körperlich identisch ist.

Dort entstehen nochmals acht Teilstrahlenbündel A11, A12, B11, B12, B21, B22, C11, C12 nullter und erster Beugungsordnung, von denen jeweils zwei gleiche Richtung haben und miteinander interferieren können.

Bei Verschiebung des Gitters 1 in Meßrichtung X gegenüber dem Gitter 2 erhalten die am Gitter 1 gebeugten Teilstrahlenbündel A1, B1, B2, C1 erster Ordnung eine Phasenverschiebung.

Das Gitter 2 ist so ausgelegt, daß bei der Beugung eines Strahls die entstehenden Teilstrahlenbündel der nullten relativ zur ersten Ordnung eine Phasenverschiebung um den Betrag P erhalten.

Dies trifft sowohl für den Durchtritt des Beleuchtungsstrahlenbündels 0 am Ort 2b durch das Phasengitter 2 als auch für den Durchtritt der Teilstrahlenbündel A1, Bl, B2, C1 an den Orten 2a und 2c zu.

Die vorgenannte Phasenverschiebung um den Betrag P wird durch eine besondere Auslegung des Gitters 2 erzielt. Eine mögliche Ausführungsform ist in der EP 0 163 362-A1 offenbart. Diese besondere Auslegung besteht bei einem Phasengitter mit rechteckigem Profil darin, daß das Steg-/Furchenverhältnis (Tastverhältnis) merklich von 1:1 abweicht und die Stufenhöhe so ausgelegt ist, daß das Gitter einen deutlich von π abweichenden Phasenhub hat.

Die interferierenden Teilstrahlenbündel A11, A12, B11, B12, B21, B22, C11, C12 fallen auf Detektoren 5a, 5b, 5c, 5d und werden in elektrische Signale umgewandelt, die bei inkrementalen Positionsmeßeinrichtungen in bekannter Weise ausgewertet werden.

Wie in Figur 1 dargestellt, ist die Verwendung kleiner Gitterkonstanten besonders vorteilhaft, da zwischen den Beugungsordnungen relativ große Beugungswinkel entstehen. Ist der Abstand zwischen den Ebenen der Gitter 1 und 2 größer als eine untere Schranke, haben die großen Beugungswinkel zur Folge, daß sich die Teilstrahlenbündel Al, B1, B2, C1 bei diesem Abtastprinzip am Gitter 2 an räumlich getrennten Orten 2a, 2c vereinigen. Die räumliche Trennung ermöglicht eine Ortsfrequenzfilterung durch Blenden 3, um störende Beugungsordnungen, die Oberwellen erzeugen, zu eliminieren.

Diese Blenden 3 liegen wie in Figur 1 gezeigt auf oder in der Nähe des Gitters 2. Durch eine Blendenöffnung am Ort 2b trifft der Lichtstrahl 0 der Lichtquelle 4 das Gitter 2. An räumlich getrennten Orten 2a, 2c befinden sich in der Blende 3 weitere Blendenöffnungen für den Austritt der miteinander interferierenden Teilstrahlenbündel A11, A12, B11, B12, B22, C11, C12. In Figur 2 ist die Blende 3 in Aufsicht dargestellt.

Es können aber auch Blenden alternativ oder zusätzlich zwischen dem Abtastgitter 2 und den Detektoren 5a, 5b, 5c, 5d angebracht werden, um weiteres Störlicht abzuschatten.

Die räumliche Trennung der Vereinigungsorte 2a, 2c ermöglicht darüberhinaus die Gewinnung von 4x90°-Signalen.

Unter der Voraussetzung, daß das Tastverhältnis und die Stufenhöhe innerhalb der Blendenöffnung geeignet gewählt ist, besteht zwischen dem Signal auf Detektor 5a und dem auf 5b ein Phasenunterschied 2P von 90°, 180° oder 270°. Gleiches gilt für die zweite Blendenöffnung. Führt man jedoch zwischen den Blendenöffnungen einen Sprung Δ einer viertel Teilungsperiode ein, so erhält man auf den Detektoren 5c und 5d Signale mit der Phase 90° bzw. 270° relativ zum Bezugssignal auf Detektor 5b.

Neben der Erzeugung von 4x90°-Signalen ist auch die bekannte Bildung von 3x120°-Signalen denkbar. Dazu muß der Teilungssprung Δ =0 sein und die Phasenverschiebung 2P=120° oder 240°.

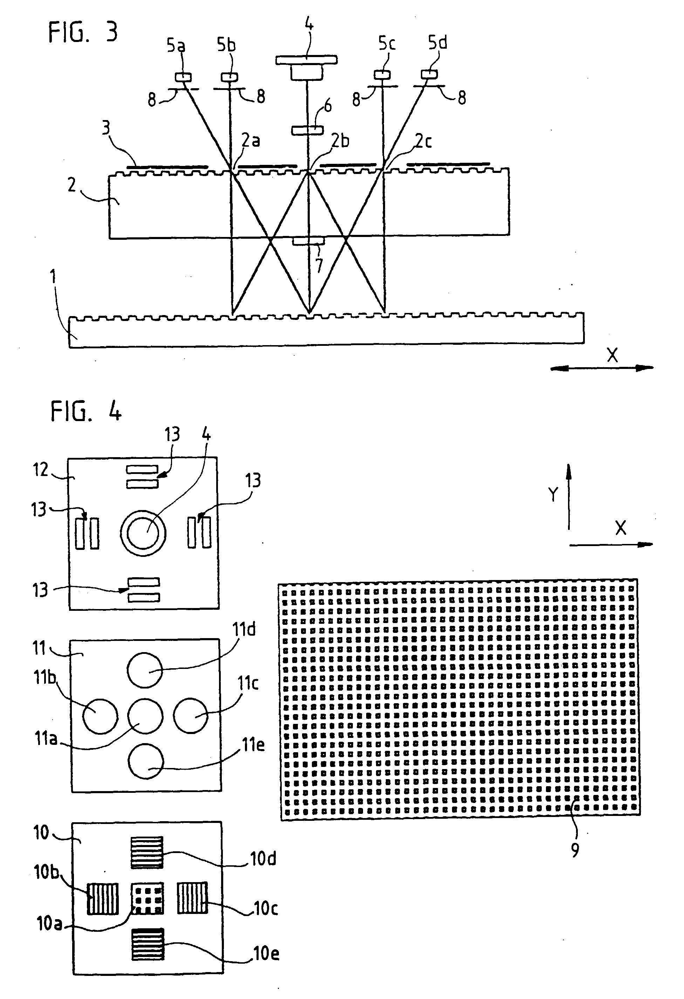

In Figur 3 ist eine alternative Möglichkeit für die Erzeugung zueinander phasenverschobener Signale auf polarisationsoptischem Weg dargestellt. Diese Möglichkeit ist an sich in der DE 40 33 013-A1 beschrieben.

Die durch die λ/4-Verzögerungsplatte 6 und die λ/2-Verzögerungsplatte 7 erzeugten orthogonal-zirkularpolarisierten Teilstrahlenbündel A1, B1, B2, C1 ergeben bei der Interferenz am Gitter 2 linear polarisiertes Licht, dessen Schwingungsazimut proportional zur Phasenlage der interferierenden Teilstrahlenbündel A11, A12, B11, B12, B21, B22, C11, C12 ist. Analysatoren 8 vor den Detektoren 5a, 5b, 5c, 5d können so eingestellt werden, daß sich z.B. 4x90°-Signale ergeben.

Auf die Eintragung der Bezugszeichen für die Strahlenbündel wurde in Figur 3 aus Gründen der Übersichtlichkeit verzichtet. Der Strahlenverlauf ist mit Figur 1 identisch.

Unter jeder der Öffnungen der Blende 3 sind individuelle Gitterparameter (Stufenhöhe und Tastverhältnis) des Gitters 2 möglich, um die Intensitätsverteilung und die Modulationsgrade zu optimieren.

Die Detektoren 5a, 5b, 5c, 5d können gemeinsam mit der Lichtquelle 4 auf einer Platine angeordnet werden, was die Bauform vereinfacht.

Besonders vorteilhaft ist die vorgeschlagene geometrische Trennung der Strahlenbündel und die Signalgewinnung für die Anwendung in einem sogenannten Kreuzgittermeßsystem, wie in der EP 0 482 224-A1 beschrieben.

Wie in Figur 4 dargestellt, bestehen in diesem Fall sowohl der Maßstab 9 als auch das als Phasengitter ausgebildete Abtastgitter 10a aus einem Kreuzgitter in x- und y-Richtung. Die Anordnung der Gitter ist mit der in Figur 1 gezeigten Anordnung identisch. Dabei entspricht das Gitter 1 dem Maßstabgitter 9, das Gitter 2 der Abtastplatte 10, die Blende 3 der Blende 11 und die Detektoren 5a, 5b, 5c, 5d den Detektoren 13.

Die Gitterbereiche 10b und 10e sowie 10c und 10d weisen jeweils rechtwinklig zueinander verlaufende Gitterlinien auf.

Eine Platine 12 trägt sowohl die Lichtquelle 4 als auch die Detektoren 13, wodurch eine kompakte Bauweise ermöglicht wird.

Als Lichtquelle 4 wird bei der Erfindung bevorzugt ein Laser, insbesondere eine Mulitmode-Laserdiode eingesetzt.

Wie bereits erläutert, vereinigen sich die Teilstrahlenbündel A1, B1, B2, C1 am Gitter 2 an räumlich getrennten Orten. Bei den gezeigten Auflichtmeßsystemen ist somit der Abstand des Aufspaltortes 2b von den Vereinigungsorten 2a, 2c größer oder gleich dem Durchmesser der Teilstrahlenbündel A1, B1, B2, C1.

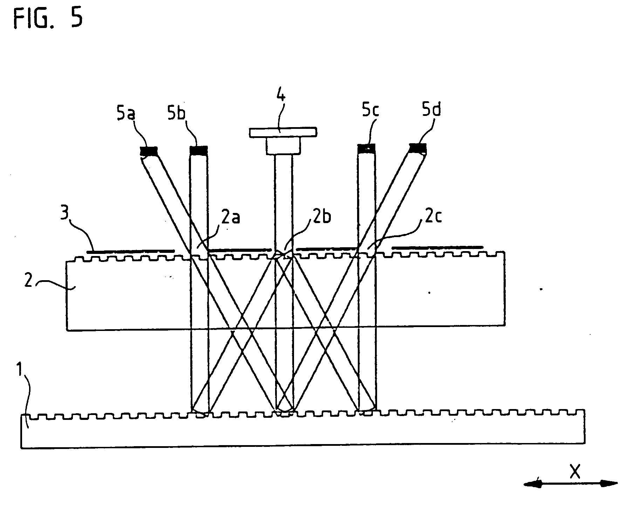

Zur Verdeutlichung der räumlichen Ausdehnung von Strahlenbündeln sind diese in Figur 5 balkenförmig dargestellt. Aus Gründen der Übersichtlichkeit wurden keine Bezugszeichen für die Strahlenbündel eingetragen. Der Strahlenverlauf ist mit Figur 1 identisch.

Wird in nicht gezeigter Weise ein Maßstab in Form eines transparenten Gitters verwendet, dann müssen die Abstände der Gitter und die Gitterparameter so gewählt werden, daß der Abstand der Vereinigungsorte am Vereinigungsgitter größer oder gleich dem Durchmesser der Teilstrahlenbündel ist. Bezogen auf die Anordnung nach Figur 1 wird bei einem derartigen Durchlichtmeßsystem das Gitter 2 nur in einer Richtung durchlaufen, während nach dem Gitter 1 ein zusätzliches Gitter als Vereinigungsgitter angeordnet ist.

## Patentansprüche

1. Interferentielles Meßsystem mit mehreren in Meßrichtung relativ zueinander verschiebbaren Gittern (1, 2; 9, 10), die von einer Lichtquelle (4) ausgesandtes Licht in räumlich ausgedehnte Teilstrahlenbündel (A, B, C; A1, B1, C1) aufspalten, beugen und ferner die gebeugten Teilstrahlenbündel (A1, B1, B2, C1) an räumlich getrennten Vereinigungsorten (2a, 2c) zur Interferenz bringen, und bei dem die Gitterparameter der Gitter (1, 2; 9, 10) und der Abstand der Gitterebenen so aufeinander abgestimmt sind, daß der Abstand der Vereinigungsorte (2a, 2c) der räumlich ausgedehnten Teilstrahlenbündel (A1, B1, B2, C1) am Vereinigungsgitter (2; 10) größer oder gleich dem Durchmesser der Teilstrahlenbündel (A1, B1, B2, C1) ist, und bei dem mindestens ein interferierendes Teilstrahlenbündel-Paar (A11, B12; B11, A12; C12, B21, B22, C11) von Detektoren (5a, 5b, 5c, 5d) detektierbar ist, wobei die Beugungsrichtung wenigstens eines Teilstrahlenbündel-Paares (A11, B12; B22, C11) von der Normalen des Gitters (2; 10) abweicht und dem Vereinigungsgitter (2; 10) wenigstens eine Ortsfrequenz-Filterblende (3; 11) zugeordnet ist.

2. Interferentielles Meßsystem nach Anspruch 1, wobei das Vereinigungsgitter (2; 10) zwischen den Vereinigungsorten (2a, 2c; 11b, 11c, 11d, 11e) einen Teilungssprung (Δ) aufweist.

3. Interferentielles Meßsystem nach Anspruch 2, wobei der Teilungssprung (Δ) eine viertel Teilungsperiode beträgt.

4. Interferentielles Meßsystem nach Anspruch 1, wobei die Lichtquelle (4) ein Laser ist.

5. Interferentielles Meßsystem nach Anspruch 4, wobei der Laser eine Multimode-Laserdiode ist.

6. Interferentielles Meßsystem nach Anspruch 1, wobei die Signalgewinnung phasenverschobener Signale auf polarisationsoptischem Weg geschieht.

7. Interferentielles Meßsystem nach Anspruch 1, wobei die Gitter (9, 10a) Kreuzgitter sind und die Gitterbereiche (10b, 10e; 10c, 10d) im wesentlichen rechtwinklig zueinander verlaufende Gitterlinien aufweisen.

## Claims

1. Interferential measuring system with several gratings (1, 2; 9, 10) which are slidable relative to each other in the direction of measurement and which split light emitted by a light source (4) into spatially extensive partial beams (A, B, C; A1, B1, C1), diffract it and also cause the diffracted partial beams (A1, B1, B2, C1) to interfere at spatially separate combining points (2a, 2c), and in which the grating parameters of the gratings (1, 2; 9, 10) and the distance between the grating planes are coordinated with each other in such a way that the distance between the combining points (2a, 2c) of the spatially extensive partial beams (A1, B1, B2, C1) at the combining grating (2; 10) is greater than or equal to the diameter of the partial beams (A1, B1, B2, C1), and in which at least one pair of interfering partial beams (A11, B12; B11, A12; C12, B21, B22, C11) can be detected by detectors (5a, 5b, 5c, 5d), wherein the direction of diffraction of at least one pair of partial beams (A11, B12; B22, C11) deviates from the normal of the grating (2; 10), and at least one local frequency filter screen (3; 11) is associated with the combining grating (2; 10).

2. Interferential measuring system according to claim 1, wherein the combining grating (2; 10) comprises a division jump (Δ) between the combining points (2a, 2c; 11b, 11c, 11d, 11e).

3. Interferential measuring system according to claim 2, wherein the division jump (Δ) is one-quarter of a division period.

4. Interferential measuring system according to claim 1, wherein the light source (4) is a laser.

5. Interferential measuring system according to claim 4, wherein the laser is a multimode laser diode.

6. Interferential measuring system according to claim 1, wherein out-of-phase signals are obtained by polarisation optics.

7. Interferential measuring system according to claim 1, wherein the gratings (9, 10a) are lattice gratings and the grating regions (10b, 10e; 10c, 10d) have grating lines extending essentially perpendicularly to each other.

## Revendications

1. Système de mesure interférentiel comportant plusieurs réseaux (1, 2; 9, 10) mobiles les uns par rapport aux autres dans la direction de mesure qui divisent la lumière émise par une source lumineuse (4) en faisceaux partiels (A, B, C; A1, B1, C1) étendus dans l'espace, la diffractent et amènent les faisceaux partiels (A1, B1, B2C1) diffractés en interférence en des points de recombinaison (2a, 2c) séparés dans l'espace et dans lequel les paramètres de réseau des réseaux (1, 2; 9, 10) et la distance des plans des réseaux sont mutuellement adaptés de telle sorte que la distance entre les points de recombinaison (2a, 2c), sur le réseau de recombinaison (2; 10), des faisceaux partiels (A1, B1, B2, C1) étendus dans l'espace soit supérieure ou égale au diamètre des faisceaux partiels (A1, B1, B2, C1) et dans lequel au moins une paire de faisceaux partiels (A11, B12; B11, A12; C12, B21; B22, C11) en interférence est palpée par des détecteurs (5a, 5b, 5c, 5d), la direction de diffraction d'au moins un couple de faisceaux partiels (A11, B12; B22, C11) s'écartant de la normale du réseau (2, 10) et au moins un filtre à fréquence locale (3; 11) étant associé au réseau de recombinaison (2; 10).

2. Système de mesure interférentiel selon la revendication 1, dans lequel le réseau de recombinaison (2; 10) présente un saut de division (Δ) entre les points de recombinaison (2a, 2c; 11b, 11c, 11d, 11e).

3. Système de mesure interférentiel selon la revendication 2, dans lequel le saut de division (Δ) représente un quart de la période de division.

4. Système de mesure interférentiel selon la revendication 1, dans lequel la source lumineuse (4) est un laser.

5. Système de mesure interférentiel selon la revendication 4, dans lequel le laser est une diode laser multimode.

6. Système de mesure interférentiel selon la revendication 1, dans lequel l'obtention de signaux déphasés a lieu par polarisation optique.

7. Système de mesure interférentiel selon la revendication 1, dans lequel les réseaux (9, 10a) sont des réseaux croisés et les zones de réseau (10b 10e; 10c, 10d) comportent des lignes de réseau qui sont disposées sensiblement à angle droit les unes par rapport aux autres.
